# EUROPÄISCHE PATENTANMELDUNG

(11) **EP 4 851 446 A1**
(43) Veröffentlichungstag der Anmeldung: **09.12.2026**
(21) Anmeldenummer: 25181490.1
(22) Anmeldetag: 06.06.2025
(51) Int. Cl.: F02D 17/04, F02D 35/02, F02D 41/14, F02D 41/22, F02P 5/152, G01L 23/22

(54) **VERFAHREN ZUM BETREIBEN EINER BRENNKRAFTMASCHINE, STEUERVORRICHTUNG FÜR EINE BRENNKRAFTMASCHINE UND BRENNKRAFTMASCHINE**

(71) Anmelder: Rolls-Royce Solutions GmbH, 88045 Friedrichshafen (DE)
(72) Erfinder: Gorontzi, Philipp, 88045 Friedrichshafen (DE)
(74) Vertreter: Gleiss Große Schrell und Partner mbB

(57) **Zusammenfassung**

Die Erfindung betrifft ein Verfahren zum Betreiben einer Brennkraftmaschine (1), wobei
a) im Betrieb der Brennkraftmaschine (1) mittels eines Motorsensors (9), der angeordnet und eingerichtet ist zur Erfassung von Vibrationen mindestens eines Brennraums (5) der Brennkraftmaschine (1), ein Sensorsignal erfasst wird, während der Brennraum (5) in einem Aktivzustand betrieben wird, in dem mittels einer Entflammungsvorrichtung (11) eine Verbrennung in dem Brennraum (5) veranlasst wird, wobei
b) anhand des Sensorsignals geprüft wird, ob in dem Brennraum (5) ein Fehlverbrennungsereignis auftritt, wobei
c) wenn anhand des Sensorsignals festgestellt wird, dass in dem Brennraum (5) ein Fehlverbrennungsereignis auftritt,
d) der Brennraum (5) in einem Passivzustand betrieben wird, in dem die Entflammungsvorrichtung (11) nicht zur Veranlassung einer Verbrennung angesteuert wird, wobei
e) das Sensorsignal in dem Passivzustand erfasst wird, und wobei
f) anhand des Sensorsignals auf ein in dem Brennraum (5) stattfindendes ungesteuertes Fehlverbrennungsereignis geprüft wird.

## Beschreibung

Die Erfindung betrifft ein Verfahren zum Betreiben einer Brennkraftmaschine, eine Steuervorrichtung für eine Brennkraftmaschine und eine Brennkraftmaschine.

Aus der US 5 934 256 A geht ein Verfahren hervor, bei dem während des Betriebs eines Dieselmotors mit Direkteinspritzung mittels Klopfsensoren ein brennraumspezifisches Sensorsignal erhalten wird, anhand dessen durch einen Abgleich mit einem Messfenster und einen Vergleich mit einem Schwellenwert darauf geschlossen wird, ob in einem Brennraum eine korrekte Einspritzung, eine zeitlich falsch terminierte und somit inkorrekte Einspritzung oder keine Einspritzung stattfindet. Demgegenüber können Fehlverbrennungsereignisse, das heißt insbesondere unerwünschte oder unkontrollierte Verbrennungen, in einem Brennraum einer Brennkraftmaschine zu vorzeitigem Verschleiß oder einer anderweitigen, auch plötzlichen Schädigung der Brennkraftmaschine führen. Solche Fehlverbrennungsereignisse können grundsätzlich ebenfalls mit Klopfsensoren detektiert werden. Handelt es sich bei einem derartigen Fehlverbrennungsereignis um eine primär klopfende Verbrennung, das heißt um eine Verbrennung, die durch irreguläre Selbstzündung eines Brennstoff- Verbrennungsluft-Gemischs in dem Brennraum verursacht wird, kann hierauf mit einer Spätverstellung eines Entflammungszeitpunkts reagiert werden. Handelt es sich dagegen um ein anderes Fehlverbrennungsereignis, beispielsweise um eine schmierölinduzierte Zündung oder Schmierölverbrennung, kann dieses nicht durch Spätverstellung des Entflammungszeitpunkts behoben werden. Mit herkömmlichen Verfahren kann nicht zwischen verschiedenen Fehlverbrennungsereignissen unterschieden werden, sodass keine gezielten Abhilfemaßnahmen getroffen werden können. Dies wiederum führt nachteilig zu einer Gefährdung, schlimmstenfalls zu einem vorzeitigen Defekt herkömmlich betriebener Brennkraftmaschinen.

Der Erfindung liegt daher die Aufgabe zugrunde, ein Verfahren zum Betreiben einer Brennkraftmaschine, eine Steuervorrichtung für eine Brennkraftmaschine und eine Brennkraftmaschine zu schaffen, wobei die zuvor beschriebenen Nachteile zumindest reduziert sind, vorzugsweise nicht auftreten.

Die Aufgabe wird gelöst, indem die vorliegende technische Lehre bereitgestellt wird, insbesondere die Lehre der unabhängigen Ansprüche sowie der in den abhängigen Ansprüchen und der Beschreibung offenbarten bevorzugten Ausführungsformen.

Die Aufgabe wird insbesondere in einem ersten Aspekt gelöst, indem ein Verfahren zum Betreiben einer Brennkraftmaschine geschaffen wird, wobei
a) im Betrieb der Brennkraftmaschine mittels eines Motorsensors, der angeordnet und eingerichtet ist zur Erfassung von Vibrationen mindestens eines Brennraums der Brennkraftmaschine, ein Sensorsignal erfasst wird, während der Brennraum in einem Aktivzustand betrieben wird, in dem mittels einer Entflammungsvorrichtung eine Verbrennung in dem Brennraum veranlasst wird, wobei
b) anhand des Sensorsignals geprüft wird, ob in dem Brennraum ein Fehlverbrennungsereignis auftritt, wobei,
c) wenn anhand des Sensorsignals festgestellt wird, dass in dem Brennraum ein Fehlverbrennungsereignis auftritt,
d) der Brennraum in einem Passivzustand betrieben wird, in dem die Entflammungsvorrichtung nicht zur Veranlassung einer Verbrennung angesteuert wird, wobei
e) das Sensorsignal in dem Passivzustand erfasst wird, und wobei
f) anhand des Sensorsignals auf ein in dem Brennraum stattfindendes ungesteuertes Fehlverbrennungsereignis geprüft wird.

Vorteilhaft ist es mithilfe des Verfahrens möglich, verschiedene Fehlverbrennungsereignisse voneinander zu unterscheiden, sodass daraufhin gezielte Abhilfemaßnahmen getroffen werden können. Eine Gefährdung, schlimmstenfalls ein vorzeitiger Defekt einer im Rahmen des Verfahrens betriebenen Brennkraftmaschine kann so wirksam vermieden werden. Zugleich verursacht das Verfahren keine hohen Zusatzkosten, da Motorsensoren, die eingerichtet sind zur Erfassung von Vibrationen des Brennraums, kostengünstig, typischerweise in der ein oder anderen Ausgestaltung bereits an Brennkraftmaschinen auch in der Serienversion verbaut oder leicht nachrüstbar sind, insbesondere da sie nicht in den Brennraum integriert werden müssen beziehungsweise keinen Zugang zu einem Inneren des Brennraums benötigen. In der Regel bedarf es für die Nachrüstung des Verfahrens sogar lediglich einer Ertüchtigung einer Steuerung der Brennkraftmaschine, die beispielsweise in Form eines Software-Updates erfolgen kann.

Unter einem Fehlverbrennungsereignis wird im Kontext der vorliegenden technischen Lehre insbesondere eine Verbrennung in dem mindestens einen Brennraum verstanden, bei der das Brennstoff- Verbrennungsluft-Gemisch nicht auf ein Entflammungsereignis hin regulär - das heißt auf bestimmungsgemäße Weise - verbrennt, wobei eine reguläre Verbrennung beispielsweise je nach Art der Brennkraftmaschine eine diffusive Verbrennung oder eine vorgemischte Verbrennung sein kann. Insbesondere erfolgt die Verbrennung bei einem Fehlverbrennungsereignis nicht entlang einer sich definiert ausbreitenden Flammenfront.

Unter einem ungesteuerten Fehlverbrennungsereignis wird im Kontext der vorliegenden technischen Lehre insbesondere eine Verbrennung bestanden, die nicht mittelbar durch eine Entflammungsvorrichtung - wie eine Zündkerze oder einen Brennstoffinjektor - ausgelöst ist, sondern vielmehr unabhängig von der Entflammungsvorrichtung, das heißt insbesondere auch bei abgeschalteter oder nicht angesteuerter Entflammungsvorrichtung auftritt. Ein solches ungestörtes Fehlverbrennungsereignis kann beispielsweise durch eine Entzündung des Brennstoff-Verbrennungsluft-Gemischs an einer Sekundärzündquelle entstehen. Dabei wird unter einer Sekundärzündquelle eine bestimmungsgemäß nicht vorgesehene Zündquelle verstanden, die unabhängig ist von der eigentlich für die Entflammung vorgesehenen Entflammungsvorrichtung. Eine solche Sekundärzündquelle kann beispielsweise ein Glutnest, insbesondere glühende Russpartikel, brennendes Schmieröl oder eine besonders heiße Stelle im Brennraum sein.

Insbesondere wird unter einem Fehlverbrennungsereignis eine klopfende Verbrennung, auch kurz als Klopfen bezeichnet, verstanden.

Dabei wird im Kontext der vorliegenden technischen Lehre unterschieden zwischen einem primären Klopfen und einem sekundären Klopfen.

Unter einem primären Klopfen wird im Kontext der vorliegenden technischen Lehre eine klopfende Verbrennung verstanden, die durch eine irreguläre, insbesondere spontane Selbstentzündung, des Brennstoff- Verbrennungsluft-Gemischs entsteht. Ein solches primäres Klopfen kann insbesondere bei Vorliegen zumindest eines auslösenden Faktors auftreten, der ausgewählt ist aus der Gruppe, bestehend aus einer hohen Brennraumtemperatur, einer hohen Kompression in dem Brennraum, einem hohen Brennraumdruck, einem frühen Entflammungszeitpunkt, und einer Kombination aus mindestens zwei der genannten Faktoren. Insbesondere kann ein früher Entflammungszeitpunkt zu einem hohen Brennraumdruck und einer hohen Brennraumtemperatur führen, was das Auftreten von primärem Klopfen begünstigt. Somit hängt das primäre Klopfen mit der Ansteuerung der Entflammungsvorrichtung zusammen und tritt nicht auf, wenn diese abgeschaltet oder nicht angesteuert wird. Weiterhin ist es grundsätzlich möglich, das primäre Klopfen durch Spätverstellung des Entflammungszeitpunkts zu beseitigen.

Unter einem frühen Entflammungszeitpunkt wird bei einem Hubkolbenmotor ein Entflammungszeitpunkt verstanden, der im Vergleich zu einem späten Entflammungszeitpunkt einen größeren zeitlichen Abstand zu einem einen Kompressionstakt von einem Arbeitstakt trennenden oberen Totpunkt - auch als Zünd-OT bezeichnet - aufweist als der späte Entflammungszeitpunkt. Umgekehrt wird unter einem späten Entflammungszeitpunkt bei einem Hubkolbenmotor ein Entflammungszeitpunkt verstanden, der im Vergleich zu einem frühen Entflammungszeitpunkt einen geringeren zeitlichen Abstand zu dem Zünd-OT aufweist als der frühe Entflammungszeitpunkt. Bei einer anderen Brennkraftmaschine, wie beispielsweise einer Rotationskolben-Brennkraftmaschine, wird eine analoge Definition der Begriffe "früh" und "spät" - insbesondere mit Bezug zu einem dem Zünd-OT entsprechenden Rotationswinkel des Rotationskolbens - angewendet.

Die Begriffe "Zeitpunkt" und "Zeit" sowie davon abgeleitete Begriffe schließen hier auch eine implizite Zeiterfassung oder Zeitabhängigkeit ein, beispielsweise in Form eines Kurbelwellenwinkels. Insbesondere werden "Zeit" und die von "Zeit" abgeleiteten Begriffe einerseits und "Kurbelwinkel" sowie davon abgeleitete Begriffe andererseits zumindest für die Zwecke des hier vorliegenden Verfahrens als synonym angesehen.

Unter einem sekundären Klopfen wird im Kontext der vorliegenden technischen Lehre ein ungesteuertes Fehlverbrennungsereignis verstanden, das zu einer klopfenden Verbrennung führen oder eine klopfende Verbrennung zur Folge haben kann. Beim sekundären Klopfen liegt keine spontane Selbstentzündung des Brennstoff-Verbrennungsluft-Gemischs vor; vielmehr entzündet sich dieses an einer Sekundärzündquelle. Somit tritt das sekundäre Klopfen unabhängig von der Ansteuerung der Entflammungsvorrichtung auf.

In einer Ausführungsform wird die Brennkraftmaschine mit vorgemischter Verbrennung betrieben. Insbesondere wird die Brennkraftmaschine mit einem homogenen Brennstoff-Verbrennungsluft-Gemisch betrieben. Vorzugsweise wird die Brennkraftmaschine fremdgezündet betrieben. In bevorzugter Ausgestaltung wird als die Brennkraftmaschine ein Ottomotor, vorzugsweise ein Gasmotor betrieben.

In einer Ausführungsform ist die Entflammungsvorrichtung eine Zündkerze, insbesondere eine elektrische Zündkerze, vorzugsweise eine Funkenzündkerze. In einer anderen Ausführungsform ist die Entflammungsvorrichtung ein Brennstoffinjektor.

In einer Ausführungsform wird das Sensorsignal in dem Kompressionstakt und/oder dem Arbeitstakt erfasst; alternativ oder zusätzlich wird das Sensorsignal - im Zeit- oder Kurbelwinkelbereich - in einem Auswertungsfenster erfasst und/oder ausgewertet, wobei das Auswertungsfenster den Kompressions- und/oder Arbeitstakt umfasst oder zumindest bereichsweise in dem Kompressions- und/oder Arbeitstakt liegt.

In einer Ausführungsform wird das Sensorsignal in einem Zeit- oder Kurbelwinkelbereich erfasst und/oder ausgewertet, zu dem alle dem Brennraum zugeordneten Gaswechselventile, das heißt insbesondere mindestens ein Einlassventil und mindestens ein Auslassventil, geschlossen sind. Insbesondere wird das Sensorsignal so erfasst, dass es keine Rückzündung anzeigen kann. Insbesondere wird anhand des Sensorsignals nicht auf eine Rückzündung geprüft.

In einer Ausführungsform wird das Sensorsignal im Frequenzbereich gefiltert, insbesondere um einen für die Erkennung des Fehlverbrennungsereignisses relevanten Frequenzbereich zu isolieren, vorzugsweise mittels eines Tiefpassfilters und/oder mittels eines Hochpassfilters.

Alternativ oder zusätzlich wird das Sensorsignal geglättet, renormiert und/oder derart beschnitten, dass es nur noch mindestens ein vorbestimmtes Zeit- oder Kurbelwinkelfenster umfasst. Beispielsweise kann gezielt ein Bereich ausgespart werden, in dem ein Gaswechselventil des Brennraums, das heißt ein Einlassventil oder ein Auslassventil, öffnet oder schließt, da derartige Ereignisse das Sensorsignal beeinflussen können. Das Sensorsignal kann alternativ oder zusätzlich auch auf andere Weise bearbeitet, verrechnet oder umgerechnet werden.

In einer Ausführungsform umfasst die Prüfung anhand des Sensorsignals, ob in dem Brennraum ein Fehlverbrennungsereignis auftritt, einen Vergleich des Sensorsignals oder mindestens eines aus dem Sensorsignal abgeleiteten Werts mit mindestens einem Schwellenwert. Dies kann insbesondere einschließen, dass ein Fehlverbrennungsereignis erkannt wird, wenn das Sensorsignal oder der daraus abgeleitete Wert den mindestens einen Schwellenwert übersteigt; umgekehrt kann erkannt werden, dass kein Fehlverbrennungsereignis in dem Brennraum auftritt, wenn das Sensorsignal oder der daraus abgeleitete Wert den mindestens einen Schwellenwert nicht übersteigt. In einer Ausgestaltung wird der Schwellenwert abhängig von einem momentanen Betriebspunkt der Brennkraftmaschine gewählt. Vorzugsweise wird der mindestens eine Schwellenwert abhängig von mindestens einem Schwellenparameter gewählt, der ausgewählt ist aus der Gruppe, bestehend aus einer Drehzahl der Brennkraftmaschine, einem Drehmoment der Brennkraftmaschine, einer Leistung der Brennkraftmaschine, und einer Kombination aus mindestens zwei der genannten Schwellenparameter.

Der Motorsensor ist insbesondere eingerichtet zur Erfassung von hochfrequenten Vibrationen, insbesondere in einem Bereich von 1 Hz bis 20 kHz, vorzugsweise von 2 Hz bis 18 kHz, vorzugsweise von 3 Hz bis 15 kHz, vorzugsweise von 4 Hz bis 12 kHz, vorzugsweise von 5 Hz bis 10 kHz, insbesondere von 10 Hz bis 5 kHz, vorzugsweise von 100 Hz bis 5 kHz.

In einer Ausführungsform wird das Sensorsignal in genau einem Arbeitsspiel erfasst und anhand dieses Sensorsignals wird auf das Fehlverbrennungsereignis geprüft. Alternativ ist es möglich, dass das Sensorsignal in einer Mehrzahl an - insbesondere aufeinanderfolgenden - Arbeitsspielen erfasst wird und hieraus insgesamt - oder anders ausgedrückt kumulativ - auf das Fehlverbrennungsereignis geprüft wird. Insbesondere kann das Sensorsignal hierzu über die Mehrzahl an Arbeitsspielen gemittelt oder in anderer geeigneter Weise verrechnet werden, insbesondere um den Einfluss von Schwankungen oder Streuungen zu minimieren. Insbesondere werden die Schritte a) und b) in einer Mehrzahl an - insbesondere aufeinanderfolgenden - Arbeitsspielen durchgeführt.

In einer Ausführungsform wird der Brennraum in genau einem Arbeitsspiel in dem Passivzustand betrieben, das Sensorsignal wird in dem Arbeitsspiel erfasst, und anhand des Sensorsignals wird auf das ungesteuerte Fehlverbrennungsereignis geprüft. Insbesondere werden die Schritte d) bis f) in genau einem Arbeitsspiel durchgeführt. Alternativ ist es möglich, dass der Brennraum in einer Mehrzahl an - insbesondere aufeinanderfolgenden - Arbeitsspielen in dem Passivzustand betrieben wird, wobei das Sensorsignal jeweils erfasst und insbesondere anhand der erfassten Sensorsignale aus der Mehrzahl an Arbeitsspielen insgesamt - oder anders ausgedrückt kumulativ - auf das ungesteuerte Fehlverbrennungsereignis geprüft wird. Insbesondere kann das Sensorsignal hierzu über die Mehrzahl an Arbeitsspielen gemittelt oder in anderer geeigneter Weise verrechnet werden, insbesondere um den Einfluss von Schwankungen oder Streuungen zu minimieren. Insbesondere werden die Schritte d) bis f) in einer Mehrzahl an - insbesondere aufeinanderfolgenden - Arbeitsspielen durchgeführt.

Die Feststellung des Fehlverbrennungsereignisses in dem Schritt c) muss nicht explizit erfolgen; vielmehr genügt es hierfür, wenn das Sensorsignal implizit - beispielsweise durch Überschreiten des Schwellenwerts - das Fehlverbrennungsereignis anzeigt.

Insbesondere werden die Schritte d) bis f) nur durchgeführt, wenn in dem Brennraum ein Fehlverbrennungsereignis auftritt, oder wenn anhand des Sensorsignals - gleichsam falschpositiv - ein tatsächlich nicht vorhandenes Fehlverbrennungsereignis fälschlich angezeigt wird. Andernfalls entfallen diese Schritte, und die Brennkraftmaschine wird regulär - das heißt ohne Eingriff des hier beschriebenen Verfahrens, gleichsam in einem alternativen Schritt d') - weiter betrieben.

Gemäß einer Weiterbildung der Erfindung ist vorgesehen, dass wenn - nach oder in dem Schritt f)-
g) anhand des Sensorsignals festgestellt wird, dass in dem Brennraum ein ungesteuertes Fehlverbrennungsereignis auftritt,
h) mindestens eine erste Abhilfemaßnahme eingeleitet wird.

Vorteilhaft kann mit der ersten Abhilfemaßnahme gezielt auf das ungesteuerte Fehlverbrennungsereignis reagiert und so eine Gefahr für die Brennkraftmaschine abgewendet werden.

Wird dagegen - nach oder in dem Schritt f) -
g') anhand des Sensorsignals festgestellt, dass in dem Brennraum kein ungesteuertes Fehlverbrennungsereignis auftritt,
h') wird der Brennraum wieder in dem Aktivzustand betrieben, wobei optional eine zweite Abhilfemaßnahme eingeleitet wird.

Vorteilhaft kann mit der zweiten Abhilfemaßnahme gezielt auf das in Schritt c) erkannte Fehlverbrennungsereignis, das kein ungesteuertes Fehlverbrennungsereignis ist, reagiert werden, wodurch die Brennkraftmaschine zumindest optimiert betrieben oder eine Gefahr für die Brennkraftmaschine abgewendet werden kann.

Gemäß einer Weiterbildung der Erfindung ist vorgesehen, dass in Schritt f) auf eine schmierölinduzierte Zündung oder auf eine Schmierölverbrennung als das ungesteuerte Fehlverbrennungsereignis geprüft - oder zumindest implizit geschlossen - wird. Die schmierölinduzierte Zündung ist ein Verbrennungsereignis, dass auftreten kann, wenn Schmieröl über Dichtungen, beispielsweise Kolbenringe, in den Brennraum gelangt und sich dort entzündet. Das entzündete Schmiermittel kann als Sekundärzündquelle wirken und sekundäres Klopfen erzeugen.

Gemäß einer Weiterbildung der Erfindung ist vorgesehen, dass als der Motorsensor ein Sensor verwendet wird, der ausgewählt ist aus einer Gruppe, bestehend aus einem Klopfsensor, einem Körperschallsensor, einem Motor-Geräuschsensor, einem piezoelektrischen Sensor, einem Mikrophon, einem Ultraschallsensor, einem Beschleunigungssensor, einem Vibrationssensor, und einer Kombination aus wenigstens zwei der genannten Sensoren. Diese Sensoren sind in besonderer Weise geeignet zur einfachen und funktionssicheren Erfassung von Vibrationen des Brennraums.

In Ausführungsform ist vorgesehen, dass als der Motorsensor kein Drucksensor verwendet wird. Somit wird die Verwendung einer teuren und typischerweise zumindest in Serie nicht verbauten Technologie vermieden. Alternativ oder zusätzlich wird im Rahmen des Verfahrens kein Drucksensor verwendet.

Gemäß einer Weiterbildung der Erfindung ist vorgesehen, dass die mindestens eine erste Abhilfemaßnahme ausgewählt ist aus einer Gruppe, bestehend aus einem Abschalten der Brennkraftmaschine, einer Leistungsreduktion der Brennkraftmaschine - vorzugsweise abhängig von einem momentanen Betriebspunkt -, einer Änderung - insbesondere Reduktion - eines Ladedrucks, einer Änderung - insbesondere Reduktion - einer Ladungstemperatur, einer Wasserinjektion in den Brennraum, einer Ausgabe einer Warnmeldung - insbesondere zur Veranlassung einer Wartung eines Tribosystems -, und einer Kombination aus mindestens zwei der genannten ersten Abhilfemaßnahmen.

Diese Maßnahmen ermöglichen vorteilhaft eine Minderung oder Beseitigung des ungesteuerten Fehlverbrennungsereignisses, das - insbesondere in Form der schmierölindizierten Zündung - nicht einfach durch eine Spätverstellung Entflammungszeitpunkts gemindert oder beseitigt werden kann.

Die Leistungsreduktion der Brennkraftmaschine erfolgt vorzugsweise abhängig vom momentanen Betriebspunkt, insbesondere derart, dass bei höherer Last eine größere Reduktion vorgenommen wird als bei niedrigerer Last. Auf diese Weise wird vorteilhaft gewährleistet, dass die Leistung gerade in kritischen Lastbereichen hinreichend reduziert wird, um eine Gefahr für die Brennkraftmaschine abzuwenden. In einer Ausgestaltung wird die Leistung bei Volllast um 5 % bis 15 %, vorzugsweise um 10 %, reduziert; alternativ oder zusätzlich wird die Leistung bei Teillast, Niedriglast oder im Leerlauf um 0,5 % bis 3 %, vorzugsweise um 1 % bis 2 % reduziert. Die Änderung kann insbesondere schrittweise - in den genannten Reduktionsschritten - durchgeführt werden, solange das ungesteuerte Fehlverbrennungsereignis erkannt wird.

Alternativ oder zusätzlich erfolgt die Änderung des Ladedrucks abhängig vom momentanen Betriebspunkt, insbesondere derart, dass bei höherer Last eine größere Reduktion vorgenommen wird als bei niedrigerer Last. In einer Ausgestaltung wird der Ladedruck bei Volllast um 5 % bis 15 %, vorzugsweise um 10 %, reduziert; alternativ oder zusätzlich wird der Ladedruck bei Teillast, Niedriglast oder im Leerlauf um 0,5 % bis 3 %, vorzugsweise um 1 % bis 2 % reduziert. Die Änderung kann insbesondere schrittweise - in den genannten Reduktionsschritten - durchgeführt werden, solange das ungesteuerte Fehlverbrennungsereignis erkannt wird.

Alternativ oder zusätzlich erfolgt die Änderung der Ladungstemperatur abhängig vom momentanen Betriebspunkt, insbesondere derart, dass bei höherer Last eine größere Reduktion vorgenommen wird als bei niedrigerer Last. In einer Ausgestaltung wird die Ladungstemperatur bei Volllast um 5 % bis 15 %, vorzugsweise um 10 %, reduziert; alternativ oder zusätzlich wird die Ladungstemperatur bei Teillast, Niedriglast oder im Leerlauf um 0,5 % bis 3 %, vorzugsweise um 1 % bis 2 % reduziert. Die Änderung kann insbesondere schrittweise - in den genannten Reduktionsschritten - durchgeführt werden, solange das ungesteuerte Fehlverbrennungsereignis erkannt wird.

Zur Änderung der Ladungstemperatur wird vorzugsweise eine Temperatur geändert, insbesondere reduziert, die ausgewählt ist aus der Gruppe, bestehend aus einer Gemischtemperatur, einer Ladelufttemperatur, einer AGR-Temperatur von in den Luftpfad zurückgeführtem Abgas, und einer Kombination aus mindestens zwei der genannten Temperaturen. Die Änderung der Ladungstemperatur wird insbesondere bewirkt, indem zumindest eine Kühlvorrichtung zur Veränderung der Ladungstemperatur angesteuert wird, wobei die zumindest eine Kühlvorrichtung ausgewählt ist aus der Gruppe, bestehend aus einem Gemischkühler, einem Ladeluftkühler, einem AGR-Kühler, und einer Kombination aus mindestens zwei der genannten Kühlvorrichtungen.

Vorteilhaft kann durch eine Wasserinjektion die Temperatur direkt in dem Brennraum reduziert werden.

Mittels der Warnmeldung kann ein Betreiber der Brennkraftmaschine vorteilhaft rechtzeitig auf eine nötige Wartung insbesondere des Tribosystems hingewiesen werden, insbesondere da eine schmierölinduzierte Zündung als das ungestörte Fehlverbrennungsereignis typischerweise bei einem Verschleiß von wenigstens einer Komponente des Tribosystems auftritt, wenn nämlich aufgrund des Verschleißes Schmieröl in an sich unerwünschter Weise in den Brennraum gelangt. Das Tribosystem umfasst dabei zumindest eine Tribokomponente, die ausgewählt ist aus der Gruppe, bestehend aus einem Kolbenring, einem Kolben, einer Laufbuchse, und einer Kombination aus mindestens zwei der genannten Tribokomponenten. Vorzugsweise umfasst das Tribosystem alle drei genannten Tribokomponenten.

Alternativ oder zusätzlich ist vorgesehen, dass die mindestens eine zweite Abhilfemaßnahme eine Spätverstellung eines Entflammungszeitpunkts in dem Brennraum ist. Vorteilhaft kann auf diese Weise geeignet auf das - gleichsam im Wege des Ausschlussverfahrens - als primäres Klopfen erkannte Fehlverbrennungsereignis reagiert werden. Da nämlich in dem Schritt g') erkannt wurde, dass kein ungesteuertes Fehlverbrennungsereignis vorliegt, kommt für das Fehlverbrennungsereignis - abgesehen von einer falsch-positiven Erkennung, die bei dem hier vorgeschlagenen Verfahren von äußerst geringer praktischer Relevanz ist - letztlich nur noch primäres Klopfen infrage.

Der Entflammungszeitpunkt ist insbesondere ein Zündzeitpunkt oder ein Einspritzzeitpunkt.

Gemäß einer Weiterbildung der Erfindung ist vorgesehen, dass nach Schritt c) und vor Schritt d)
c1) ein Entflammungszeitpunkt in dem Brennraum nach spät verstellt wird, wobei
c2) das Sensorsignal erfasst und anhand des Sensorsignals geprüft wird, ob das Fehlverbrennungsereignis weiter auftritt, wobei
c3) die Schritte c1) und c2) so lange wiederholt werden, bis entweder das Fehlverbrennungsereignis nicht weiter auftritt oder eine vorbestimmte Anzahl an Wiederholungen erreicht ist, wobei,
c4) wenn das Fehlverbrennungsereignis nicht weiter auftritt, der Brennraum mit dem nach spät verstellten Entflammungszeitpunkt weiter betrieben und die Schritte d) bis f) nicht durchgeführt werden, wobei,
c5) wenn die vorbestimmte Anzahl an Wiederholungen erreicht ist - und insbesondere somit das Fehlverbrennungsereignis weiter auftritt -, das Verfahren in Schritt d) fortgesetzt wird.

Vorteilhaft kann auf diese Weise zunächst geprüft werden, ob sich das festgestellte Fehlverbrennungsereignis durch Spätverstellung des Entflammungszeitpunkts beheben lässt. Auf diese Weise kann rasch und schnell insbesondere auf primäres Klopfen reagiert werden, ohne dass es der weiteren Prüfschritte bedarf.

In einer Ausführungsform wird der Entflammungszeitpunkt in dem Schritt c1) um ein - vorzugsweise parametrierbares - vorbestimmtes Verstellinkrement nach spät verstellt. Insbesondere in diesem Fall entspricht die vorbestimmte Anzahl an Wiederholungen des Schritts c3) einem vorbestimmten maximalen Verstellintervall, das sich als Produkt aus dem vorbestimmten Verstellinkrement mit der vorbestimmten Anzahl an Wiederholungen plus eins - nämlich zuzüglich der ersten Spätverstellung, die keine Wiederholung ist - ergibt.

In einer Ausgestaltung ist die vorbestimmte Anzahl an Wiederholungen parametrierbar.

Gemäß einer Weiterbildung der Erfindung ist vorgesehen, dass das Verfahren für eine Mehrzahl an Brennräumen der Brennkraftmaschine durchgeführt wird.

In einer Ausführungsform wird das Verfahren für alle Brennräume der Brennkraftmaschine durchgeführt.

In einer Ausgestaltung ist jedem Brennraum der Brennkraftmaschine ein separater Motorsensor zugeordnet. Dies bedeutet insbesondere, dass die Brennkraftmaschine so viele Motorsensoren aufweist, wie sie Brennräume aufweist.

Alternativ ist es möglich, dass die Brennkraftmaschine weniger Motorsensoren als Brennräume aufweist, wobei Zuordnung des Sensorsignals oder der Sensorsignale zu den Brennräumen aufgrund von mindestens einem Zuordnungskriterium erfolgt, beispielsweise anhand vorbestimmter Zeit- oder Kurbelwinkelfenster. Somit ist es vorteilhaft möglich, ein Sensorsignal eines Motorsensors brennraumspezifisch für eine Mehrzahl an Brennräumen auszuwerten. Insbesondere bei kleineren Brennkraftmaschinen mit nicht zu vielen Brennräumen, insbesondere bis zu zwölf Brennräumen, kann gegebenenfalls sogar ein einziger Motorsensor genügen, um die Kompression in allen Brennräumen brennraumspezifisch bewerten zu können.

Gemäß einer Weiterbildung der Erfindung ist vorgesehen, dass das Verfahren dauerhaft während des Betriebs der Brennkraftmaschine durchgeführt wird.

Alternativ oder zusätzlich wird das Verfahren während des Betriebs der Brennkraftmaschine in vorbestimmten - insbesondere regelmäßigen - Abständen, vorzugsweise periodisch, durchgeführt.

Alternativ oder zusätzlich wird das Verfahren während des Betriebs der Brennkraftmaschine auf ein Auslösesignal hin durchgeführt. In einer Ausführungsform wird das Auslösesignal automatisch bedarfsweise, das heißt unter vorbestimmten Umständen, beispielsweise bei einem anderweitig unvorhergesehenen oder unerklärbaren Leistungseinbruch der Brennkraftmaschine, generiert. Alternativ oder zusätzlich kann das Auslösesignal durch eine Nutzeranforderung, insbesondere durch einen Betreiber der Brennkraftmaschine, erzeugt werden, um die Durchführung des Verfahrens auszulösen.

Gemäß einer Weiterbildung der Erfindung ist vorgesehen, dass die Brennkraftmaschine lokal stationär betrieben wird.

In einer Ausgestaltung wird die Brennkraftmaschine in einem Blockheizkraftwerk, zum Betreiben einer Förderpumpe oder als Notstromaggregat betrieben.

Die Aufgabe wird in einem zweiten Aspekt auch gelöst, indem eine Steuervorrichtung für eine Brennkraftmaschine geschaffen wird, die eingerichtet ist zur Durchführung eines erfindungsgemäßen Verfahrens oder eines Verfahrens nach einer oder mehreren der zuvor beschriebenen Ausführungsformen. In Zusammenhang mit der Steuervorrichtung ergeben sich insbesondere diejenigen Vorteile, die zuvor bereits in Zusammenhang mit dem Verfahren erläutert wurden.

Die Aufgabe wird in einem dritten Aspekt auch gelöst, indem eine Brennkraftmaschine geschaffen wird, die mindestens einen Brennraum, mindestens einen dem Brennraum zugeordneten Motorsensor und eine Steuervorrichtung aufweist, wobei die Steuervorrichtung mit dem mindestens einen Motorsensor wirkverbunden und eingerichtet ist zur Durchführung eines erfindungsgemäßen Verfahrens oder eines Verfahrens nach einer oder mehreren der zuvor beschriebenen Ausführungsformen. In Zusammenhang mit der Brennkraftmaschine ergeben sich insbesondere diejenigen Vorteile, die zuvor bereits in Zusammenhang mit dem Verfahren oder der Steuervorrichtung erläutert wurden.

In einer Ausführungsform weist die Brennkraftmaschine eine erfindungsgemäße Steuervorrichtung oder eine Steuervorrichtung nach einer oder mehreren der zuvor beschriebenen Ausführungsformen auf.

In einer Ausführungsform weist die Brennkraftmaschine mindestens eine, dem mindestens einen Brennraum zugeordnete Entflammungsvorrichtung auf. Die Steuervorrichtung ist dabei mit der Entflammungsvorrichtung zu deren Ansteuerung wirkverbunden. Die Entflammungsvorrichtung ist insbesondere eine Zündkerze, insbesondere eine elektrische Zündkerze, vorzugsweise eine Funkenzündkerze, oder ein Brennstoffinjektor.

Alternativ oder zusätzlich weist die Brennkraftmaschine zumindest eine Kühlvorrichtung zur Veränderung einer Ladungstemperatur auf, die ausgewählt ist aus der Gruppe, bestehend aus einem Gemischkühler, einem Ladeluftkühler, einem AGR-Kühler, und einer Kombination aus mindestens zwei der genannten Kühlvorrichtungen. Die Steuervorrichtung ist mit der mindestens einen Kühlvorrichtung zu deren Ansteuerung wirkverbunden.

Der mindestens eine Motorsensor ist vorzugsweise ausgewählt aus der Gruppe, bestehend aus einem Klopfsensor, einem Körperschallsensor, einem Motor-Geräuschsensor, einem piezoelektrischen Sensor, einem Mikrophon, einem Ultraschallsensor, einem Beschleunigungssensor, einem Vibrationssensor, und einer Kombination aus wenigstens zwei der genannten Sensoren.

In einer Ausführungsform ist vorgesehen, dass die Brennkraftmaschine keinen Drucksensor aufweist. Insbesondere ist dem mindestens einen Brennraum der Brennkraftmaschine kein Drucksensor zugeordnet. Vorzugsweise ist keinem der Brennräume der Brennkraftmaschine ein Drucksensor zugeordnet. Insbesondere ist der Motorsensor kein Drucksensor, insbesondere kein Brennraumdrucksensor.

Gemäß einer Weiterbildung der Erfindung ist vorgesehen, dass die Brennkraftmaschine eine Mehrzahl an Brennräumen aufweist. Dabei ist es möglich, dass jedem Brennraum ein separater Motorsensor zugeordnet ist. Dies bedeutet insbesondere, dass die Brennkraftmaschine so viele Motorsensoren aufweist, wie sie Brennräume aufweist.

Alternativ ist es möglich, dass die Brennkraftmaschine weniger Motorsensoren als Brennräume, insbesondere auch nur einen Motorsensor, aufweist.

Gemäß einer Weiterbildung der Erfindung ist vorgesehen, dass die Brennkraftmaschine als stationäre Brennkraftmaschine ausgebildet ist.

In einer Ausgestaltung ist die Brennkraftmaschine zur Verwendung - insbesondere zur Erzeugung von elektrischer Leistung und Wärme - in einem Blockheizkraftwerk, zum Betreiben einer Förderpumpe oder als Notstromaggregat, ausgebildet.

Die Erfindung wird im Folgenden anhand der Zeichnung näher erläutert. Dabei zeigen:
- Figur 1: ein Ausführungsbeispiel einer Brennkraftmaschine und ein Ausführungsbeispiel einer Steuervorrichtung;
- Figur 2: ein erstes Ausführungsbeispiel eines Verfahrens zum Betreiben der Brennkraftmaschine, und
- Figur 3: eine Detaildarstellung eines zweiten Ausführungsbeispiels des Verfahrens.

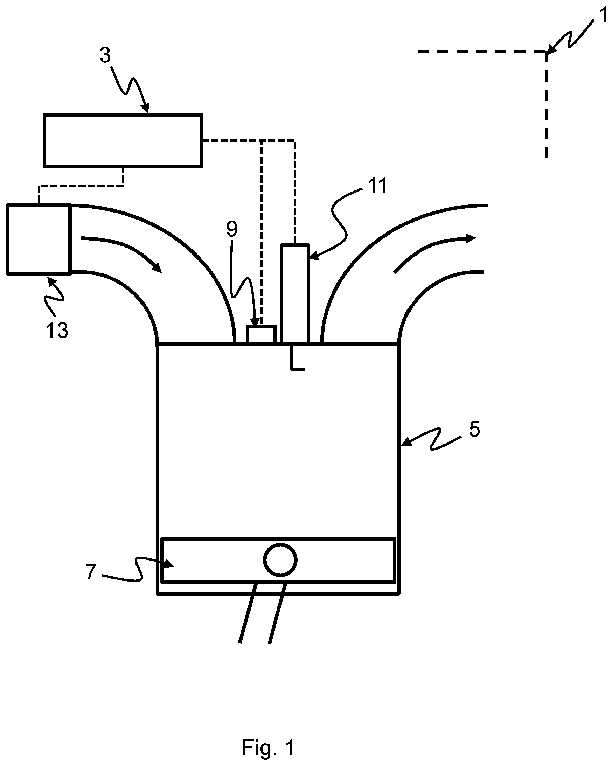

**Fig. 1** zeigt ein Ausführungsbeispiel einer Brennkraftmaschine 1 und ein Ausführungsbeispiel einer Steuervorrichtung 3.

Die Brennkraftmaschine 1weist mindestens einen Brennraum 5 auf, in dem ein Kolben 7 verlagerbar angeordnet ist. Die Brennkraftmaschine 1 weist außerdem mindestens einen Motorsensor 9 auf, der angeordnet und eingerichtet ist zur Erfassung von - insbesondere hochfrequenten - Vibrationen des Brennraums 5. Die Brennkraftmaschine 1 weist auch die Steuervorrichtung 3 auf, die mit dem mindestens einen Motorsensor 9 wirkverbunden und eingerichtet ist, um ein Sensorsignal des Motorsensors 9 zu empfangen, wobei die Steuervorrichtung 3 weiter eingerichtet ist, um die Kompression in dem mindestens einen Brennraum 5 anhand des Sensorsignals des Motorsensors 9 zu bewerten.

Der mindestens eine Motorsensor 9 ist vorzugsweise ausgewählt aus der Gruppe, bestehend aus einem Klopfsensor, einem Körperschallsensor, einem Motor-Geräuschsensor, einem piezoelektrischen Sensor, einem Mikrophon, einem Ultraschallsensor, einem Beschleunigungssensor, einem Vibrationssensor, und einer Kombination aus wenigstens zwei der genannten Sensoren. Insbesondere ist der Motorsensor 9 kein Brennraumdrucksensor.

Der mindestens eine Motorsensor 9 ist bevorzugt eingerichtet zur Erfassung von hochfrequenten Vibrationen, insbesondere in einem Bereich von 1 kHz bis 20 kHz, vorzugsweise von 2 kHz bis 18 kHz, vorzugsweise von 3 kHz bis 15 kHz, vorzugsweise von 4 kHz bis 12 kHz, vorzugsweise von 5 kHz bis 10 kHz, insbesondere von 1 kHz bis 5 kHz.

Die Brennkraftmaschine 1 weist bevorzugt eine Mehrzahl an Brennräumen 5 auf, wobei das hier beschriebene Verfahren vorzugsweise für jeden der Brennräume 5 durchgeführt wird. Dabei ist es möglich, dass jedem Brennraum 5 ein separater Motorsensor 9 zugeordnet ist. Dies bedeutet insbesondere, dass die Brennkraftmaschine 1 so viele Motorsensoren 9 aufweist, wie sie Brennräume 5 aufweist. Alternativ ist es möglich, dass die Brennkraftmaschine 1 weniger Motorsensoren 9 als Brennräume 5, insbesondere auch nur einen einzigen Motorsensor 9, aufweist.

Die Brennkraftmaschine 1 weist außerdem eine Entflammungsvorrichtung 11 auf, die eingerichtet ist zur Entflammung eines Brennstoff- Verbrennungsluft-Gemischs in dem Brennraum 5. Die Steuervorrichtung 3 ist mit der Entflammungsvorrichtung 11 zu deren Ansteuerung wirkverbunden. Die Entflammungsvorrichtung 11 ist bevorzugt als Zündkerze oder als Brennstoffinjektor ausgebildet.

Weiter weist die Brennkraftmaschine 1 bevorzugt eine Kühlvorrichtung 13 zur Veränderung einer Ladungstemperatur auf. Die Kühlvorrichtung 13 ist vorzugsweise ausgewählt aus der Gruppe, bestehend aus einem Gemischkühler, einem Ladeluftkühler, einem AGR-Kühler, und einer Kombination aus mindestens zwei der genannten Kühlvorrichtungen. Die Steuervorrichtung 3 ist mit der Kühlvorrichtung 13 zu deren Ansteuerung wirkverbunden.

Die Brennkraftmaschine 1 ist hier als Hubkolbenmotor ausgebildet. Sie kann aber beispielsweise auch als Rotationskolbenmotor, Kreiskolbenmotor oder Wankelmotor ausgebildet sein. Vorzugsweise ist die Brennkraftmaschine 1 als Ottomotor, insbesondere als Gasmotor ausgebildet.

Die Brennkraftmaschine 1 ist vorzugsweise als stationäre Brennkraftmaschine, insbesondere für ein Blockheizkraftwerk, zum Betreiben einer Förderpumpe oder als Notstromaggregat, ausgebildet.

Die Steuervorrichtung 3 ist bevorzugt eingerichtet zur Durchführung des im Folgenden näher beschriebenen Verfahrens.

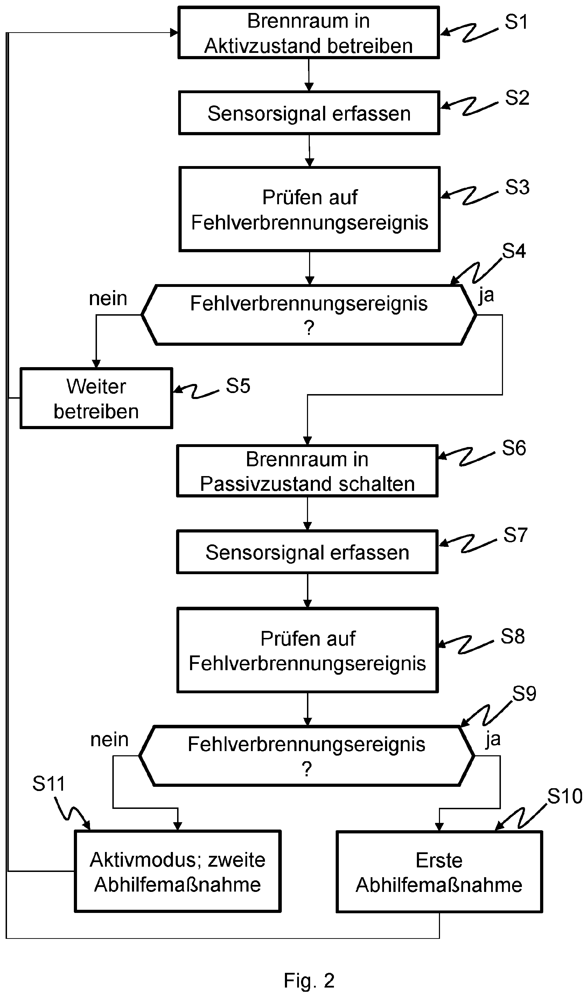

**Fig. 2** zeigt ein erstes Ausführungsbeispiel eines Verfahrens zum Betreiben der Brennkraftmaschine 1.

Gleiche und funktionsgleiche Elemente sind in allen Figuren mit gleichen Bezugszeichen versehen, sodass insofern jeweils auf die vorangegangene Beschreibung verwiesen wird. Außerdem sind in einer Figur mehrfach auftretende Elemente der besseren Übersichtlichkeit wegen jeweils nur einmal mit einem Bezugszeichen versehen.

In einem ersten Schritt S1 wird der Brennraum 5 in einem Aktivzustand betrieben, das heißt die Entflammungsvorrichtung 11 wird zur Entflammung des Brennstoff- Verbrennungsluft-Gemischs angesteuert.

In einem zweiten Schritt S2 wird mittels des Motorsensors 9 das Sensorsignal erfasst. Optional wird das Sensorsignal zusätzlich in dem zweiten Schritt S2 verarbeitet, insbesondere gefiltert, vorzugsweise mittels eines Tiefpassfilters und/oder mittels eines Hochpassfilters, geglättet, renormiert und/oder beschnitten.

In einem dritten Schritt S3 wird anhand des Sensorsignals geprüft, ob in dem Brennraum 5 ein Fehlverbrennungsereignis auftritt.

Wird in einem vierten Schritt S4 festgestellt, dass kein Fehlverbrennungsereignis auftritt, wird die Brennkraftmaschine 1 in einem fünften Schritt S5 regulär weiter betrieben. Anschließend wird das Verfahren vorzugsweise in dem ersten Schritt S1 fortgesetzt.

Wird dagegen in dem vierten Schritt S4 festgestellt, dass ein Fehlverbrennungsereignis vorliegt, wird der Brennraum 5 in einem sechsten Schritt S6 in einen Passivzustand geschaltet, wobei die Entflammungsvorrichtung 11 nicht zur Veranlassung einer Verbrennung angesteuert wird.

Anschließend wird in einem siebten Schritt S7 wiederum das Sensorsignal erfasst und optional verarbeitet - vorzugsweise wie in dem zweiten Schritt S2.

In einem achten Schritt S8 wird auf ein ungesteuertes Fehlverbrennungsereignis geprüft. Insbesondere wird auf eine schmierölinduzierte Zündung oder Schmierölverbrennung als das ungesteuerte Fehlverbrennungsereignis geprüft.

Wird darauf in einem neunten Schritt S9 festgestellt, dass ein ungesteuertes Fehlverbrennungsereignis auftritt, wird in einem zehnten Schritt S10 mindestens eine erste Abhilfemaßnahme eingeleitet. Anschließend wird - sofern die Brennkraftmaschine 1 nicht abgestellt wird - das Verfahren bevorzugt in dem ersten Schritt S1 fortgesetzt.

Wird in dem neunten Schritt S9 dagegen festgestellt, dass kein ungesteuertes Fehlverbrennungsereignis auftritt, wird der Brennraum 5 in dem Aktivmodus betrieben, und optional wird eine zweite Abhilfemaßnahme eingeleitet. Anschließend wird das Verfahren bevorzugt in dem ersten Schritt S1 fortgesetzt.

Das Verfahren wird somit bevorzugt dauerhaft während des Betriebs der Brennkraftmaschine 1 durchgeführt.

Alternativ oder zusätzlich wird das Verfahren während des Betriebs der Brennkraftmaschine 1 in vorbestimmten - insbesondere regelmäßigen - Abständen, vorzugsweise periodisch, durchgeführt.

Alternativ oder zusätzlich wird das Verfahren während des Betriebs der Brennkraftmaschine 1 auf ein Auslösesignal hin durchgeführt. In einer Ausführungsform wird das Auslösesignal automatisch bedarfsweise, das heißt unter vorbestimmten Umständen, beispielsweise bei einem anderweitig unvorhergesehenen oder unerklärbaren Leistungseinbruch der Brennkraftmaschine 1, generiert. Alternativ oder zusätzlich kann das Auslösesignal durch eine Nutzeranforderung, insbesondere durch einen Betreiber der Brennkraftmaschine 1, erzeugt werden, um die Durchführung des Verfahrens auszulösen.

Die mindestens eine erste Abhilfemaßnahme ist bevorzugt ausgewählt aus einer Gruppe, bestehend aus einem Abschalten der Brennkraftmaschine 1, einer Leistungsreduktion der Brennkraftmaschine 1 - vorzugsweise abhängig von einem momentanen Betriebspunkt -, einer Änderung eines Ladedrucks, einer Änderung einer Ladungstemperatur, einer Wasserinjektion in den Brennraum 5, einer Ausgabe einer Warnmeldung - insbesondere zur Veranlassung einer Wartung eines Tribosystems der Brennkraftmaschine 1 -, und einer Kombination aus mindestens zwei der genannten ersten Abhilfemaßnahmen.

Die mindestens eine zweite Abhilfemaßnahme ist bevorzugt eine Spätverstellung eines Entflammungszeitpunkts in dem Brennraum 5.

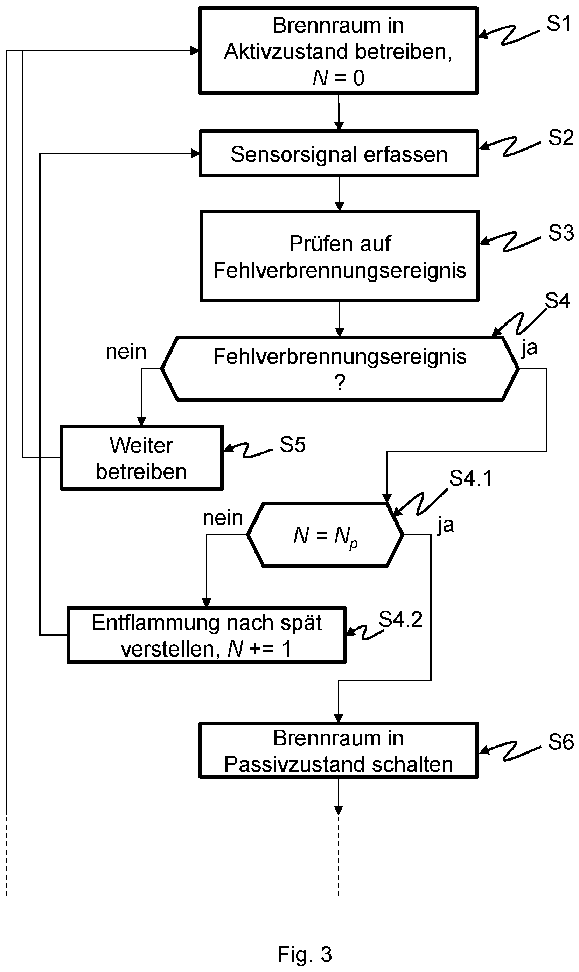

**Fig. 3** zeigt eine Detaildarstellung eines zweiten Ausführungsbeispiels des Verfahrens.

Bei diesem zweiten Ausführungsbeispiel ist der erste Schritt S1 - bis auf eine zusätzliche Initialisierung einer Anzahl N an Spätverstellungen für den Entflammungszeitpunkt zu Null - identisch zu dem ersten Schritt S1 des ersten Ausführungsbeispiels. Auch der zweite Schritt S2, der dritte Schritt S3, der vierte Schritt S4 und der fünfte Schritt S5 sind identisch zu den entsprechenden Schritten des ersten Ausführungsbeispiels.

Das zweite Ausführungsbeispiel unterscheidet sich von dem ersten Ausführungsbeispiel insoweit, als dann, wenn in dem vierten Schritt S4 ein Fehlverbrennungsereignis erkannt wird, zunächst in einem ersten Teilschritt S4.1 geprüft wird, ob die Anzahl N an Spätverstellungen für den Entflammungszeitpunkt gleich einer vorbestimmten Grenzanzahl *Nₚ* ist. Die vorbestimmte Grenzanzahl *Nₚ* ist dabei eine vorbestimmte Anzahl an Wiederholungen der hier iterierten Schritte plus eins, da die erste Spätverstellung nicht als Wiederholung gezählt wird.

Ist die Anzahl *N* nicht gleich der vorbestimmten Grenzanzahl *Nₚ*, wird der Entflammungszeitpunkt in einem zweiten Teilschritt S4.2 vorzugsweise um ein vorbestimmtes Verstellinkrement nach spät verstellt, und die Anzahl *N* wird um eins inkrementiert. Anschließend wird das Verfahren in dem zweiten Schritt S2 fortgesetzt.

Wird in dem ersten Teilschritt S4.1 festgestellt, dass die Anzahl N an Spätverstellungen für den Entflammungszeitpunkt gleich der vorbestimmten Grenzanzahl *Nₚ* ist, wird das Verfahren wird in dem sechsten Schritt S6 fortgesetzt, der wiederum identisch ist zu dem sechsten Schritt S6 in dem ersten Ausführungsbeispiel.

Auch die weiteren, hier nicht explizit dargestellten Schritte S7 bis S11 sind identisch zu dem ersten Ausführungsbeispiel. Vorzugsweise wird das Verfahren jeweils nach dem zehnten Schritt S10 - sofern die Brennkraftmaschine 1 nicht abgestellt wird - oder dem elften Schritt S11 in dem ersten Schritt S1 fortgesetzt.

## Patentansprüche

1. Verfahren zum Betreiben einer Brennkraftmaschine (1), wobei
a) im Betrieb der Brennkraftmaschine (1) mittels eines Motorsensors (9), der angeordnet und eingerichtet ist zur Erfassung von Vibrationen mindestens eines Brennraums (5) der Brennkraftmaschine (1), ein Sensorsignal erfasst wird, während der Brennraum (5) in einem Aktivzustand betrieben wird, in dem mittels einer Entflammungsvorrichtung (11) eine Verbrennung in dem Brennraum (5) veranlasst wird, wobei
b) anhand des Sensorsignals geprüft wird, ob in dem Brennraum (5) ein Fehlverbrennungsereignis auftritt, wobei
c) wenn anhand des Sensorsignals festgestellt wird, dass in dem Brennraum (5) ein Fehlverbrennungsereignis auftritt,
d) der Brennraum (5) in einem Passivzustand betrieben wird, in dem die Entflammungsvorrichtung (11) nicht zur Veranlassung einer Verbrennung angesteuert wird, wobei
e) das Sensorsignal in dem Passivzustand erfasst wird, und wobei
f) anhand des Sensorsignals auf ein in dem Brennraum (5) stattfindendes ungesteuertes Fehlverbrennungsereignis geprüft wird.

2. Verfahren nach Anspruch 1, wobei,
g) wenn anhand des Sensorsignals festgestellt wird, dass in dem Brennraum (5) ein ungesteuertes Fehlverbrennungsereignis auftritt,
h) mindestens eine erste Abhilfemaßnahme eingeleitet wird, oder
g') wenn anhand des Sensorsignals festgestellt wird, dass in dem Brennraum (5) kein ungesteuertes Fehlverbrennungsereignis auftritt,
h') der Brennraum (5) wieder in dem Aktivzustand betrieben wird, wobei optional eine zweite Abhilfemaßnahme eingeleitet wird.

3. Verfahren nach einem der vorhergehenden Ansprüche, wobei in Schritt f) auf eine schmierölinduzierte Zündung oder Schmierölverbrennung als das ungesteuerte Fehlverbrennungsereignis geprüft wird.

4. Verfahren nach einem der vorhergehenden Ansprüche, wobei als der Motorsensor (9) ein Sensor verwendet wird, der ausgewählt ist aus einer Gruppe, bestehend aus einem Klopfsensor, einem Körperschallsensor, einem Motor-Geräuschsensor, einem piezoelektrischen Sensor, einem Mikrophon, einem Ultraschallsensor, einem Beschleunigungssensor, einem Vibrationssensor, und einer Kombination aus wenigstens zwei der genannten Sensoren.

5. Verfahren nach einem der vorhergehenden Ansprüche, wobei
- die mindestens eine erste Abhilfemaßnahme ausgewählt ist aus einer Gruppe, bestehend aus einem Abschalten der Brennkraftmaschine (1), einer Leistungsreduktion der Brennkraftmaschine (1) - vorzugsweise abhängig von einem momentanen Betriebspunkt -, einer Änderung eines Ladedrucks, einer Änderung einer Ladungstemperatur, einer Wasserinjektion in den Brennraum (5), einer Ausgabe einer Warnmeldung - insbesondere zur Veranlassung einer Wartung eines Tribosystems -, und einer Kombination aus mindestens zwei der genannten ersten Abhilfemaßnahmen, und/oder
- die mindestens eine zweite Abhilfemaßnahme eine Spätverstellung eines Entflammungszeitpunkts in dem Brennraum (5) ist.

6. Verfahren nach einem der vorhergehenden Ansprüche, wobei nach Schritt c) und vor Schritt d)
c1) ein Entflammungszeitpunkt in dem Brennraum (5) nach spät verstellt wird, wobei
c2) das Sensorsignal erfasst und anhand des Sensorsignals geprüft wird, ob das Fehlverbrennungsereignis weiter auftritt, wobei
c3) die Schritte c1) und c2) so lange wiederholt werden, bis entweder das Fehlverbrennungsereignis nicht weiter auftritt oder eine vorbestimmte Anzahl an Wiederholungen erreicht ist, wobei
c4) wenn das Fehlverbrennungsereignis nicht weiter auftritt, der Brennraum (5) mit dem nach spät verstellten Entflammungszeitpunkt weiter betrieben und die Schritte d) bis f) nicht durchgeführt werden, wobei
c5) wenn die vorbestimmte Anzahl an Wiederholungen erreicht ist, das Verfahren in Schritt d) fortgesetzt wird.

7. Verfahren nach einem der vorhergehenden Ansprüche, wobei das Verfahren für eine Mehrzahl an Brennräumen (5) der Brennkraftmaschine (1), vorzugsweise für alle Brennräume (5) der Brennkraftmaschine (1), durchgeführt wird, wobei optional jedem Brennraum (5) der Brennkraftmaschine (1) ein separater Motorsensor (9) zugeordnet ist.

8. Verfahren nach einem der vorhergehenden Ansprüche, wobei das Verfahren dauerhaft während des Betriebs der Brennkraftmaschine (1), in vorbestimmten Abständen, vorzugsweise periodisch, oder auf ein Auslösesignal hin durchgeführt wird.

9. Verfahren nach einem der vorhergehenden Ansprüche, wobei die Brennkraftmaschine (1) lokal stationär betrieben wird, insbesondere in einem Blockheizkraftwerk, zum Betreiben einer Förderpumpe oder als Notstromaggregat.

10. Steuervorrichtung (3) für eine Brennkraftmaschine (1), eingerichtet zur Durchführung eines Verfahrens nach einem der vorhergehenden Ansprüche.

11. Brennkraftmaschine (1), mit mindestens einem Brennraum (5), mindestens einem dem Brennraum (5) zugeordneten Motorsensor (9) und einer Steuervorrichtung (3), die mit dem mindestens einen Motorsensor (9) wirkverbunden und eingerichtet ist zur Durchführung eines Verfahrens nach einem der Ansprüche 1 bis 9, insbesondere einer Steuervorrichtung (3) nach Anspruch 10.

12. Brennkraftmaschine (1) nach Anspruch 11, wobei die Brennkraftmaschine (1) eine Mehrzahl an Brennräumen (5) aufweist, wobei optional jedem Brennraum (5) ein separater Motorsensor (9) zugeordnet ist.

13. Brennkraftmaschine (1) nach einem der Ansprüche 11 oder 12, wobei die Brennkraftmaschine (1) als stationäre Brennkraftmaschine, insbesondere für ein Blockheizkraftwerk, zum Betreiben einer Förderpumpe oder als Notstromaggregat, ausgebildet ist.
